# EUROPÄISCHE PATENTSCHRIFT

(11) **EP 0 561 227 B1**
(45) Veröffentlichungstag und Bekanntmachung des Hinweises auf die Patenterteilung: **04.06.1997**
(21) Anmeldenummer: 93103434.2
(22) Anmeldetag: 04.03.1993
(51) Int. Cl.: B27M 1/08, B23Q 7/14, B27C 9/04

(54) **Abbundmaschine zum Bearbeiten von Kanthölzern oder dergleichen**
Machine tool for working squared beams or the like
Machine-outil pour l'usinage de poutrelles ou similaires

(30) Priorität: 14.03.1992 DE 4208233
(43) Veröffentlichungstag der Anmeldung: 22.09.1993
(73) Patentinhaber: Hundegger, Hans, D-87749 Hawangen (DE)
(72) Erfinder: Hundegger, Hans, D-87749 Hawangen (DE)
(74) Vertreter: Pfister, Helmut, Dipl.-Ing.

(56) Entgegenhaltungen:
- EP-A- 0 319 032
- EP-A- 0 456 850
- WO-A-89/05709
- FR-A- 2 650 968
- GB-A- 2 200 320
- US-A- 4 681 210

## Beschreibung

Die Erfindung betrifft ein Verfahren zum Bearbeiten von Kanthölzern entsprechend dem Oberbegriff des Anspruches 1. Weiter betrifft die Erfindung eine Abbundmaschine zum Bearbeiten von Kanthölzern oder dergleichen gemäß dem Oberbegriff des Anspruches 2.

In der DE-B1-34 20 080 ist eine Abbundmaschine bekannt geworden, wobei auf der Schienenbahn ein Schlitten beweglich ist, der einen Dorn besitzt, welcher zu Ankuppelzwecken in das Werkstück eindrückbar ist. Bei Abbundmaschinen dieser Gattung wird derart vorgegangen, daß in einem Eingangsbereich vor den Bearbeitungsaggregaten das Werkstück mittels des Dornes mit dem Schlitten bzw. der Schleppeinrichtung gekuppelt wird. Durch geeignete Antriebs- und Steuereinrichtungen bewegt sich dann das Werkstück durch die einzelnen Bearbeitungsstationen und wird jeweils in der geeigneten Stellung positioniert. Die Bearbeitungsaggregate nehmen die einzelnen Bearbeitungen vor, beispielsweise Schnitte mittels einer Quersäge oder auch die Anbringung von Abplattungen, Ausfräsungen, Bohrungen usw.

Der Vorteil der bekannten Abbundmaschine besteht insbesondere darin, daß der Bearbeitungsablauf völlig automatisch erfolgen kann. Der Dorn wird an einer Stelle eingedrückt, die nicht bearbeitet werden muß. Dann wird zunächst mittels einer Säge das vordere Ende bearbeitet und ausgehend von diesem Schnitt, d.h. in vorbestimmten Abständen zu dieser Schnittfläche, werden dann alle übrigen Bearbeitungen vorgenommen.

Ist das Werkstück fertig bearbeitet, wird der Dorn ausgezogen und der Schlitten bzw. die Schleppeinrichtung kehrt in die Ausgangslage zurück zur Ankuppelung an das nächste Werkstück usw.

In der WO-A-89/05709 ist eine andere Abbundmaschine beschrieben, bei der ebenfalls ein Schlitten vorgesehen ist, der das Werkstück zu den einzelnen Bearbeitungsaggregaten transportiert. An der Aufgabeseite der Abbundmaschine ist dabei ein Magazin vorgesehen, das Aufnahmekammern mit Vormaterialien besitzt. Die Vormaterialien können wahlweise den Bearbeitungsaggregaten zugefördert werden. Zu diesem Zweck ist eine Vorschubeinrichtung vorgesehen, welche die Vormaterialien in Bearbeitungsstellung bringt. Nach erfolgter Bewegung in die Fertigungsstrecke passiert das Vormaterial einen Sensor, welcher die Anlage zur Fertigung in Betrieb setzt.

Der Erfindung liegt die Aufgabe zugrunde, die Leistung der bekannten Abbundmaschine zu steigern, wobei zur Steigerung der Leistungsfähigkeit ein möglichst geringer Aufwand notwendig sein soll.

Zur Lösung dieser Aufgabe geht die Erfindung aus von dem Verfahren gemäß dem Oberbegriff des Anspruches 1 und schlägt die im kennzeichnenden Teil aufgeführten Merkmale vor.

Die erfindungsgemäße Abbundmaschine geht aus von dem Oberbegriff des Anspruches 2 und schlägt die im kennzeichnenden Teil aufgeführten Merkmale vor.

Die Oberbegriffe der Ansprüche 1 und 2 entsprechen dabei der Lehre des Dokumentes WO-A-89/05709.

Die Erfindung geht von der Überlegung aus, daß das erste Bearbeitungsaggregat als erstes Aggregat die Bearbeitung des Werkstückes vollendet hat. Während nun das Werkstück durch die weiteren Bearbeitungsaggregate bearbeitet wird, wird es durch die Erfindung möglich, bereits das nächste Werkstück wenigstens zu einen gewissen Teil zu bearbeiten. Für diesen Vorgang ist dabei ein sehr geringer Aufwand erforderlich. Es ist nur notwendig, das Werkstück in die Bearbeitungsposition zu fördern, derart, daß das vordere Ende des Werkstückes bearbeitet werden kann. Dies geschieht beispielsweise durch eine Lichtschranke, die zum richtigen Zeitpunkt die zusätzliche Fördereinrichtung anhält. Die Feststelleinrichtungen, die ohnehin notwendig sind, erfassen nun das Werkstück und halten dieses bei der Bearbeitung durch das erste Bearbeitungsaggregat fest. Dieses erste Bearbeitungsaggregat wird in der Regel, jedoch nicht ausschließlich, eine Quersäge sein. Die Quersäge kann auch derart ausgestaltet sein, daß die Achse des Sägeblatts der Quersäge neigbar ist, so daß schräge Schnitte in beliebiger Richtung angebracht werden können. Die Position des Werkstückes muß für diese Bearbeitungsgänge nicht verändert werden. Sie kann nach wie vor von den Feststelleinrichtungen für das erste Bearbeitungsaggregat fixiert sein.

Die zusätliche Fördereinrichtung, die bei der Erfindung vorgesehen ist, benötigt daher keine besondere aufwendige Steuereinrichtung. Es ist auch nicht notwendig, daß diese zusätliche Fördereinrichtung eine besondere Angriffsstelle am Werkstück auswählt.

Wenn das vorangehende Werkstück völlig bearbeitet ist, ist in der Regel das vordere Ende des nachfolgenden Werkstückes durch die erfindungsgemäßen Mittel ebenfalls bearbeitet. Nun übernimmt die bekannte Schleppeinrichtung das Werkstück. Beim Ankuppelvorgang wird der genaue Abstand der Schleppeinrichtung vom vorderen Ende des Werkstückes festgehalten, so daß das nachfolgende Programm ohne irgendwelche zusätzlichen Justiermaßnahmen ablaufen kann.

Es wurde gefunden, daß durch die erfindungsgemäßen Maßnahmen eine Steigerung der Leistung der ganzen Abbundmaschine um ca. 25 bis 30 % erreicht werden kann.

Die zusätliche Fördereinrichtung, die bei der erfindungsgemäßen Lösung vorgesehen ist, kann eine unterschiedliche Ausbildung aufweisen. Beispielsweise kann diese zusätliche Fördereinrichtung ähnlich gestaltet sein wie die Transporteinrichtung, d.h. wie die Schleppeinrichtung. Dadurch benützt die zusätliche Fördereinrichtung die entsprechenden Teile der Transporteinrichtung, jedoch nur zu dem Zeitpunkt, in dem diese Transporteinrichtung von der zusätlichen Fördereinrichtung einen ausreichenden Abstand aufweist. Bevor die Transporteinrichtung, d.h. die Schleppeinrichtung, zur Übernahme des teilweise bearbeiteten Werkstückes zurückkehrt, kann die zusätliche Fördereinrichtung auf der Schienenbahn in einen Bereich außerhalb des Bewegungsbereiches der Schleppeinrichtung gebracht werden.

Insbesondere schlägt die Erfindung vor, daß die zusätliche Fördereinrichtung aus einem umlaufenden Fördermittel besteht.

Dieses umlaufende Fördermittel kann beispielsweise mittels Dornen auf das Werkstück einwirken, oder das umlaufende Fördermittel wirkt durch Reibschluß auf das Werkstück. Von Vorteil ist hierbei, daß bei der Erfindung eine exakte Mitnahme mit hoher Präzision zwischen der zusätzlichen Fördereinrichtung und dem Werkstück nicht notwendig ist. Es genügt, wenn das Werkstück mit dem vorderen Ende ausreichend genau bezüglich des ersten Bearbeitungsaggregates positioniert wird. Geringfügige Bewegungen zwischen der Fördereinrichtung und dem Werkstück sind hierbei ohne Nachteil. Die geforderte hohe Präzision des Werkstückes wird nachfolgend von der Ankuppelvorrichtung der Schleppeinrichtung erhalten, die keinerlei Bewegungen zwischen dem Werkstück und der Schleppeinrichtung zuläßt.

Wenn ein umlaufendes Fördermittel benutzt wird, ist es von Vorteil, wenn das Fördermittel anhebbar ausgestaltet wird. Durch die Anhebung kommt das Fördermittel außer Eingriff mit den Werkstücken, so daß die Übernahme durch die Schleppeinrichtung nicht behindert wird.

Günstig ist es auch, wenn die zusätzliche Fördereinrichtung seitlich des Bewegungsbereiches der Schleppeinrichtung auf das Werkstück einwirkt. Hierdurch entfallen besondere Maßnahmen, um eine Kollision zwischen der Schleppeinrichtung und der zusätzlichen Fördereinrichtung auszuschließen.

In der Zeichnung ist ein Ausführungsbeispiel der Erfindung schematisch dargestellt. Es zeigen:

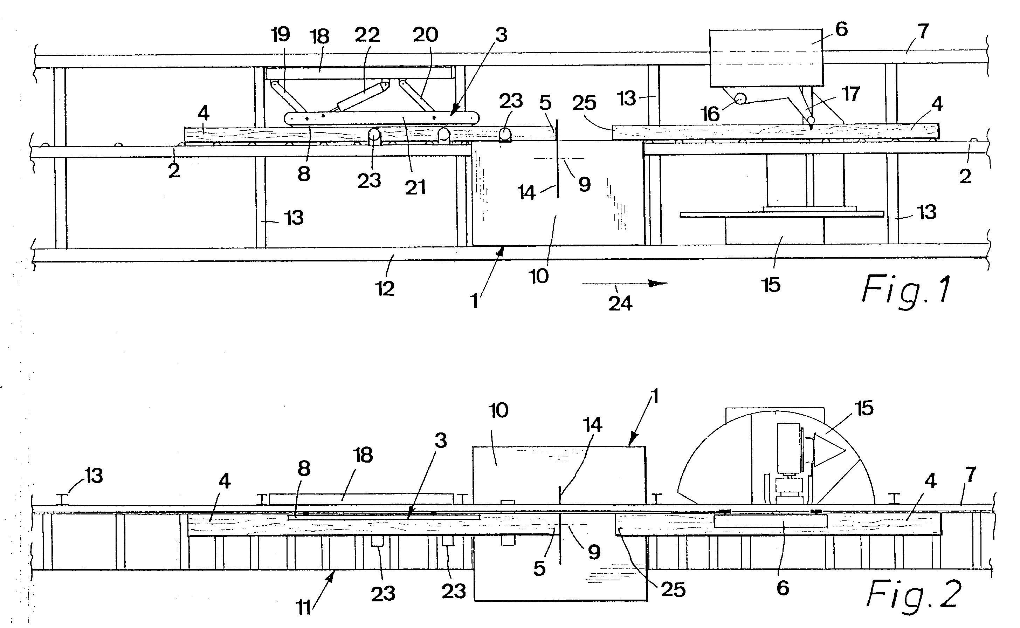

- Fig. 1: eine Seitenansicht der erfindungsgemäßen Abbundmaschine, und
- Fig. 2: eine Seitenansicht zur Darstellung der Fig. 1.

Auf dem Grundrahmen 12 sind die Stützen 13 angeordnet, die die Rollenbahn 2 und die Schienenbahn 7 tragen. Zwischen die einzelnen Teile der Rollenbahn ist als erstes Bearbeitungsaggregat 1 die Quersäge 10 eingesetzt.

Die Achse des Sägeblattes 14 ist mit 9 bezeichnet. Ein weiteres Bearbeitungsaggregat 15 ist beispielsweise seitlich der Rollenbahn 2 angeordnet. Dieses Bearbeitungsaggregat kann eine Fräseinrichtung oder dergleichen sein.

An das Bearbeitungsaggregat 15 schließen sich am rechten Ende weitere Bearbeitungsaggregate an, die in der Zeichnung nicht näher gezeigt sind.

Auf der Schienenbahn 7 ist die Schleppeinrichtung 6 verschiebbar, die mit einer, um den Zapfen 16 verschwenkbaren Einrichtung 17 mittels eines Dornes in das Werkstück 4 eingreift, so daß eine sichere Verbindung zwischen der Schleppeinrichtung 6 und dem Werkstück 4 erhalten wird.

Die Schleppeinrichtung kann beispielsweise einen motorischen Antrieb besitzen, mit dem sie sich sinngemäß auf der Schienenbahn 7 bewegen kann. Die Schleppeinrichtung kann aber auch durch eine Kette, einen Seilzug oder dergleichen gesteuert sein. Die Einrichtungen zur Bewegung und auch zur Steuerung der Schleppeinrichtung 6 sind in der Zeichnung nicht näher dargestellt.

Im Eingangsbereich 11, der sich in der gezeigten Darstellung links der Quersäge 10 befindet, ist eine zusätzliche Fördereinrichtung 3 vorgesehen. In einem Rahmen 18 der ohne Behinderung der Beweglichkeit der Schleppeinrichtung 6 mit der Schienenbahn 7 verbunden ist, sind zwei Lenker 19 und 20 befestigt, die an ihren unteren Enden ein Gestell 21 für das umlaufende Fördermittel 8 tragen. Dieses umlaufende Fördermittel kann beispielsweise eine Kette mit nach außen gerichteten Zähnen sein. Durch die Zylinder-Kolbenanordnung 22 ist es möglich, das Gestell 21 anzuheben und abzusenken. Das umlaufende Fördermittel 8 und die zugehörigen Einrichtungen bestehen aus den Teilen 19 bis 22 und sind dabei so angeordnet, daß sie nicht mit der Schleppeinrichtung 6 kollidieren, wenn diese sich auf der Schienenbahn 7 in den Bereich der zusätzlichen Fördereinrichtung bewegt.

Wenn nun die Schleppeinrichtung 6 und das von ihr bewegte Werkstück die Stellung eingenommen hat, die in der Zeichnung gezeigt ist, kann ein weiteres Werkstück im Eingangsbereich 11 auf die Rollenbahn 2 aufgebracht werden. Die zusätzliche Fördereinrichtung 3 erfaßt durch Absenkung des Gestells 21 dieses Werkstück und bringt dieses mit dem vorderen Ende 5 in den Arbeitsbereich der Quersäge 10. Die richtige Stelle wird hierbei beispielsweise durch eine Fotozelle oder ein ähnliches Mittel bestimmt. Ist diese Stellung erreicht, werden seitliche Pressen 23 beaufschlagt, die dieses Werkstück 4 in der erreichten Stellung fixieren. Diese Pressen können beispielsweise pneumatisch angetrieben sein. Sie können beidseitig vorgesehen sein oder auch mit einem Anschlag zusammenwirken. Vorzugsweise wirken die Pressen von der Seite, um eine Kollision mit der Schleppeinrichtung oder auch mit der zusätzlichen Fördereinrichtung auszuschließen. In dieser Stellung des Werkstückes kann die zusätzliche Fördereinrichtung 3 außer Funktion treten, also angehoben werden. Es wird nun das vordere Ende 5 des Werkstückes durch das erste Bearbeitungsaggregat, also die Quersäge bearbeitet, wobei es auch möglich ist, die Achse 9 zu neigen, so daß mehrere im Winkel zueinander ausgerichtete Schnitte durchführbar sind, wenn dies erforderlich ist.

Während der ganzen Zeitspanne, in der die zusätzliche Fördereinrichtung 3 wirksam ist und auch das vordere Ende 5 des Werkstückes 4 bearbeitet wird, kann die Bearbeitung des Werkstückes, das von der Schleppeinrichtung 6 bewegt wird, fortgesetzt werden. Es durchläuft die verschiedenen Bearbeitungsaggregate, bis das fertige Werkstück im Ausgangsbereich, der sich bei der Anordnung der Zeichnung rechts außerhalb der bildlichen Darstellung befindet, abgelegt wird. Die Schleppeinrichtung 6 kuppelt vom Werkstück 4 ab und die Schleppeinrichtung 6 kehrt zu dem Werkstück zurück, das bisher nur an seinem vorderen Ende 5 bearbeitet worden ist. An einer geeigneten Stelle erfaßt die Schleppeinrichtung 6 mit der Einrichtung 17 das Werkstück 4 und fördert dies den weiteren Bearbeitungsaggregaten zu.

Die einzelnen Bearbeitungsaggregate besitzen gleichartige Feststelleinrichtungen 23, wie diese im Bereich des ersten Bearbeitungsaggregates bzw. der zusätzlichen Fördereinrichtung vorgesehen sind. Im allgemeinen durchläuft das Werkstück die einzelnen Bearbeitungsaggregate fortlaufend in gleicher Richtung. Es ist aber auch möglich, daß die Schleppeinrichtung teilweise das Werkstück 4 entgegen der Förderrichtung, die von dem Pfeil 24 angedeutet ist, zurückfördert, um bestimmte Bearbeitungsstationen in bestimmter Reihenfolge zu erreichen. Sobald jedoch durch das Steuerprogramm feststeht, daß das rückwärtige Ende 25 des Werkstückes 4 den Bereich des ersten Bearbeitungsaggregates verlassen hat, kann die zusätzliche Fördereinrichtung 3 ein neues Werkstück der Bearbeitung in der Abbundmaschine zuführen.

Wenn im Zusammenhang mit der Erfindung vom ersten Bearbeitungsaggregat gesprochen wird, so schließt dies nicht grundsätzlich aus, daß vor diesem ersten Bearbeitungsaggregat noch zusätzliche, insbesondere untergeordnete Bearbeitungsaggregate vorgesehen werden. Die Steuereinrichtung, die die Bewegungen der Schleppeinrichtung bestimmt, würde dann solche zusätzlichen Bearbeitungsaggregate beim normalen Arbeitsablauf anfahren und das Werkstück sinngemäß positionieren. In der Regel ist jedoch eine solche Anordnung weniger zu bevorzugen, weil hierdurch nur die Zeitspanne verlängert wird, bis zu der das Ende 25 dem Bereich des ersten Bearbeitungsaggregates, das durch die zusätzliche Fördereinrichtung 3 angefahren werden kann, verlängert wird. Die Anordnung sollte derart getroffen, daß bei normalem Arbeitsablauf das erste Bearbeitungsaggregat dasjenige Aggregat ist, das zu einem frühest möglichen Zeitpunkt vom Werkstück freigegeben wird, wenn dieses durch die Schleppeinrichtung 6 bewegt wird.

Bei dem in der Zeichnung gezeigten Ausführungsbeispiel ist eine Rollenbahn 2 gezeigt, auf der die Werkstücke 4 aufliegen. Die Ebene dieser Rollenbahn ist dabei im wesentlichen horizontal. Es ist jedoch auch möglich, die Anordnung so zu treffen, daß die Rollen eine Transportfläche bilden, die mit der Horizontalen einen spitzen oder auch rechten Winkel bilden. In diesen Fällen ist dann die Angriffsrichtung sowohl der Einrichtung 17 an der Schleppeinrichtung 6 als auch des zusätzlichen Fördermittels sinngemäß zu neigen.

Bei einer Variante der Erfindung ist die zusätzliche Fördereinrichtung ähnlich ausgebildet wie die Schleppeinrichtung und bewegt sich ebenfalls auf der Schienenbahn 7. Der Antrieb der zusätzlichen Fördereinrichtung ist jedoch auch in diesem Fall verschieden und unabhängig vom Antrieb der Schleppeinrichtung 6. Zu dem Zeitpunkt, zu dem die Schleppeinrichtung 6 dann das Werkstück 4 nach der Bearbeitung des vorderen Endes 5 übernimmt, ist die zusätzliche Fördereinrichtung in Richtung auf das in der Zeichnung linke Ende der Schienenbahn 7 aus dem Bewegungsbereich der Schleppeinrichtung 6 wegzuführen.

## Patentansprüche

1. Verfahren zum Bearbeiten von Kanthölzern (4) oder dergleichen in einer Abbundanlage, mit mehreren Bearbeitungsaggregaten (1, 15) längs eine Rollenbahn (2) oder dergleichen, auf der das Werkstück (4) aufliegt, wobei ein erstes Werkstück (4) von einer zusätzlichen Fördereinrichtung (3) einem ersten Bearbeitungsaggregat (1) zugefördert wird, und dieses erste Werkstück (4) nach Bearbeitung durch das erste Bearbeitungsaggregat (1) von einer Transporteinrichtung weiteren, nach dem ersten Bearbeitungsaggregat (1) vorgesehenen Bearbeitungsaggregaten (15) zugefördert wird, wobei die Transporteinrichtung eine Schienenbahn (7) längs der Rollenbahn (2) oder dergleichen umfaßt für eine angetriebene Schleppeinrichtung (6), die starr mit dem Werkstück (4) kuppelbar ist, mit einer Steuereinrichtung für den Antrieb der Schleppeinrichtung (6), die das Werkstück (4) nacheinander in vorgewählte, den am Werkstück durch die Bearbeitungsaggregate (1) vorzunehmenden Bearbeitungen entsprechende Stellungen positioniert und mit Feststelleinrichtungen (23) zur jeweiligen Fixierung des Werkstückes (4) während der Bearbeitungen, **dadurch gekennzeichnet, daß** während des Zuförderns des ersten Werkstückes (4) an das erste Bearbeitungsaggregat (1) und während des Bearbeitens durch dieses erste Bearbeitungsaggregat (1) ein zweites Werkstück (4) von der Transporteinrichtung gefördert und von den weiteren Bearbeitungsaggregaten (15) bearbeitet wird, wobei die Transporteinrichtung das erste Werkstück (4) erst nach der Bearbeitung durch das erste Bearbeitungsaggregat (1) zur Weiterförderung übernimmt.

2. Abbundmaschine zum Bearbeiten von Kanthölzern oder dergleichen mit mehreren Bearbeitungsaggregaten (15) längs einer Rollenbahn (2) oder dergleichen, auf der das Werkstück (4) aufliegt, mit einer Transporteinrichtung, bestehend aus einer Schienenbahn (7) längs der Rollenbahn (2) oder dergleichen für eine angetriebene Schleppeinrichtung (6), die starr mit dem Werkstück (4) kuppelbar ist, mit einer Steuereinrichtung für den Antrieb der Schleppeinrichtung (6), die das Werkstück (4) nacheinander in vorgewählte, den am Werkstück (4) durch die Bearbeitungsaggregate vorzunehmenden Bearbeitungen entsprechende Stellungen positioniert und mit Feststelleinrichtungen (23) zur jeweiligen Fixierung des Werkstückes (4) während der Bearbeitung, wobei im Eingangsbereich (11) vor dem ersten. Bearbeitungsaggregat (1) parallel zur Rollenbahn (2) eine zusätzliche Fördereinrichtung (3) für das Werkstück (4) vorgesehen ist, die das Werkstück (4) mit dem vorderen Ende (5) dem ersten Bearbeitungsaggregat (1) zufördert und in dem die Schleppeinrichtung (6) das Werkstück (4) übernimmt, **dadurch gekennzeichnet, daß** die Steuereinrichtung ein erstes Werkstück (4) mittels der zusätzlichen Fördereinrichtung (3) dem ersten Bearbeitungsaggregat (1) zufördert und durch das erste Bearbeitungsaggregat (1) bearbeiten läßt und die Steuereinrichtung gleichzeitig mittels der Schleppeinrichtung (6) ein zweites Werkstück (4) den weiteren Bearbeitungsaggregaten (15) zufördert und durch diese bearbeiten läßt und daß die Schleppeinrichtung (6) das Werkstück (4) nach der Bearbeitung durch das erste Bearbeitungsaggregat übernimmt.

3. Abbundmaschine nach Anspruch 2, **dadurch gekennzeichnet, daß** die Fördereinrichtung (3) auf der Schienenbahn (7) beweglich ist.

4. Abbundmaschine nach Anspruch 2 oder 3,, **dadurch gekennzeichnet, daß** die Fördereinrichtung (3) aus einem umlaufenden Fördermittel (8) besteht.

5. Abbundmaschine nach Anspruch 4, **dadurch gekennzeichnet, daß** das umlaufende Fördermittel (8) mittels Dornen auf das Werkstück (4) einwirkt.

6. Abbundmaschine nach einem der Ansprüche 4 oder 5, **dadurch gekennzeichnet, daß** das umlaufende Fördermittel (8) durch Reibschluß auf das Werkstück (4) einwirkt.

7. Abbundmaschine nach einem oder mehreren der Ansprüche 4 bis 6, **dadurch gekennzeichnet, daß** das umlaufende Fördermittel (8) anhebbar und absenkbar angeordnet ist.

8. Abbundmaschine nach einem oder mehreren der Ansprüche 2 bis 7, **dadurch gekennzeichnet, daß** die erste Transporteinrichtung (3) seitlich des Bewegungsbereichees der Schleppeinrichtung (6) auf das Werkstück (4) einwirkt.

9. Abbundmaschine nach einem oder mehreren der Ansprüche 2 bis 8, **dadurch gekennzeichnet, daß** das erste Bearbeitungsaggregat (1) eine Quersäge (10) aufweist.

10. Abbundmaschine nach Anspruch 9, **dadurch gekennzeichnet, daß** die Achse (9) der Quersäge (10) neigbar ist.

## Claims

1. Method for processing squared timber (4) or the like in a trimming plant, having several processing units (1, 15) positioned along a roller path (2) or the like on which the workpiece (4) rests, with the first workpiece (4) being transported to the first processing unit (1) by means of an additional conveyor (3), said first workpiece (4) being transported by a conveyor to further processing units (15) provided after the first processing unit (1) after being processed by said first processing unit (1), said conveyor comprising along the roller path (2) or the like a rail track for a powered towing device (6) capable of being rigidly coupled to the workpiece (4), having a means of control for driving the towing device (6) which successively positions the workpiece (4) as preselected according to the processing operations to be performed on the workpiece (4) by the processing units (1) and having locking means (23) for fixing the workpiece (4) during each processing operation, **characterized in that** while the first workpiece (4) is fed to the first processing unit (1) and said workpiece (4) is processed by said first processing unit (1) a second workpiece (4) is transported by the conveyor and processed by the further processing units (15), said first workpiece (4) not being received by the conveyor for further transport until processing by the first processing unit (1) has been effected.

2. Trimming machine for processing squared timber or the like having several processing units (15) along a roller path (2) or the like on which the workpiece (4) rests, having a conveyor comprising a rail track (7) along the roller path (2) or the like for a powered towing device (6) capable of being rigidly coupled to the workpiece (4), having a means of control for driving the towing device (6) which successively positions the workpiece (4) as preselected according to the processing operations to be performed on the workpiece (4) by the processing units and having locking means (23) for fixing the workpiece (4) during each processing operation, with an additional conveyor (3) for the workpiece (4) provided in the loading area (11) before the first processing unit (1) parallel to the roller path (2), said conveyor transporting the workpiece (4) by its front end (5) to the first processing unit (1) where the towing device (6) receives the workpiece (4), **characterized in that** the means of control transports by means of the additional conveyor (3) a first workpiece (4) to the first processing unit (1) for processing by the first processing unit (1) and the means of control simultaneously transports by means of the towing device (6) a second workpiece (4) to the further processing units (15) for processing by said processing units (15) and in that the towing device (6) receives the workpiece (4) after processing by the first processing unit (1).

3. Trimming machine according to claim 2, **characterized in that** the conveyor (3) is movable on the rail track (7).

4. Trimming machine according to claim 2 or 3, **characterized in that** the conveyor (3) comprises a continuously travelling means of transport (8).

5. Trimming machine according to claim 4, **characterized in that** the continuously travelling means of transport (8) acts on the workpiece (4) by means of spikes.

6. Trimming machine according to claim 4 or 5, **characterized in that** the continuously travelling means of transport (8) acts on the workpiece (4) by means of frictional engagement.

7. Trimming machine according to one or several of claims 4 to 6, **characterized in that** the continuously travelling means of transport (8) is arranged so as to be capable of being raised and lowered.

8. Trimming machine according to one or several of claims 2 to 7, **characterized in that** the first conveyor (3) acts on the workpiece (4) laterally to the range of movement of the towing device (6).

9. Trimming machine according to one or several of claims 2 to 8, **characterized in that** the first processing unit (1) has a trim saw (10).

10. Trimming machine according to one or several of claims 2 to 9, **characterized in that** the axis (9) of the trim saw (10) is inclinable.

## Revendications

1. Procédé d'usinage de bois équarris (4) ou de matériaux similaires par une machine d'usinage automatique du bois, ayant plusieurs agrégats d'usinage (1,15) le long d'un support à rouleaux (2) ou d'un support similaire sur lequel repose la pièce à usiner (4), une première pièce à usiner (4) étant amenée par un dispositif de transport supplémentaire (3) vers un premier agrégat d'usinage (1) et ensuite, à la fin de l'usinage effectué par le premier agrégat de l'usinage (1), amenée par un dispositif de transport vers d'autres agrégats d'usinage (15) prévus après le premier agrégat d'usinage (1), ce dispositif de transport comprenant un support à rails (7) le long du support à rouleaux (2) ou d'un support similaire pour un dispositif de traînage (6) qui peut être accouplé à la pièce à usiner (4) de manière rigide ayant un dispositif de pilotage pour la commande du dispositif de traînage (6) positionnant la pièce à usiner (4) successivement aux endroits préalablement sélectionnés correspondant aux usinages à réaliser par les agrégats d'usinage (1) et ayant des dispositifs de fixation (23) pour le maintien de la pièce à usiner (4) pendant les usinages, caractérisé en ce qu'une deuxième pièce à usiner (4) est transportée par le dispositif de transport et est traitée par les agrégats d'usinage (15) suivants pendant le transport de la première pièce à usiner (4) vers le premier agrégat d'usinage (1) et pendant l'usinage par cet agrégat d'usinage (1), le dispositif de transport ne prenant la première pièce à usiner (4) en charge qu'après qu'elle ait été usinée par le premier agrégat d'usinage (1).

2. Machine d'usinage automatique du bois pour l'usinage de bois équarris ou de matériaux similaires ayant plusieurs agrégats d'usinage (15) le long d'un support à rouleaux (2) ou d'un support similaire sur lequel repose la pièce à usiner (4) avec un dispositif de transport consistant en un support à rails (7) le long du support à rouleaux (2) ou d'un support similaire pour un dispositif de traînage (6) commandé, qui peut être accouplé à la pièce à usiner (4) de manière rigide avec un dispositif de pilotage pour la commande du dispositif de traînage (6) positionnant la pièce à usiner (4) successivement aux endroits préalablement sélectionnés correspondant aux usinages à réaliser par les agrégats d'usinage et ayant des dispositifs de fixation (23) pour le maintien de la pièce à usiner (4) pendant l'usinage, un dispositif de transport supplémentaire (3) pour la pièce à usiner (4) étant prévu dans la zone d'entrée (11) parallèlement au support à rouleaux (2) avant le premier agrégat d'usinage (1) qui amène la pièce à usiner (4) avec son bout avant (5) vers le premier agrégat d'usinage (1) et où la pièce à usiner (4) est prise en charge par le dispositif de traînage (6), caractérisée en ce que le dispositif de pilotage transporte une première pièce à usiner (4) au moyen d'un dispositif de transport supplémentaire (3) vers le premier agrégat d'usinage (1) et la fait usiner par le premier agrégat d'usinage (1) pendant que ce dispositif de pilotage transporte au moyen du dispositif de traînage (6) une deuxième pièce à usiner (4) vers les autres agrégats d'usinage (15) et la fait traiter par ceux-ci, le dispositif de traînage (6) prenant en charge la pièce en cours d'usinage (4) après l'usinage par le premier agrégat d'usinage.

3. Machine d'usinage automatique du bois selon la revendication 2 caractérisée en ce que le dispositif de transport (3) est mobile sur le support à rails (7).

4. Machine d'usinage automatique du bois selon les revendications 2 ou 3 caractérisée en ce que le dispositif de transport (3) consiste en un moyen de transport circulant (8).

5. Machine d'usinage automatique du bois selon la revendication 4 caractérisée en ce que le moyen de transport circulant (8) agit sur la pièce à usiner (4) au moyen de dents.

6. Machine d'usinage automatique du bois selon les revendications 4 ou 5 caractérisée en ce que le moyen de transport circulant (8) agit sur la pièce à usiner (4) au moyen de frottement.

7. Machine d'usinage automatique du bois selon l'une ou plusieurs des revendications précédentes 4 à 6 caractérisée en ce que le moyen de transport circulant (8) est réalisé de façon à pouvoir être soulevé ou abaissé.

8. Machine d'usinage automatique du bois selon l'une ou plusieurs des revendications précédentes 2 à 7 caractérisée en ce que le premier dispositif de transport (3) agit sur la pièce à usiner (4) du côté de la zone de mouvement du dispositif de traînage (6).

9. Machine d'usinage automatique du bois selon l'une ou plusieurs des revendications précédentes 2 à 8 caractérisée en ce que le premier agrégat d'usinage (1) présente une scie transversale (10).

10. Machine d'usinage automatique du bois selon la revendication 9 caractérisée en ce que l'axe (9) de la scie transversale (10) peut être incliné.
